# EUROPEAN PATENT APPLICATION

(11) **EP 3 293 322 A1**
(43) Date of publication of application: **14.03.2018**
(21) Application number: 16188665.0
(22) Date of filing: 13.09.2016
(51) Int. Cl.: E04F 15/02, C09K 3/14, B05D 5/00, B44C 1/22

(54) **SLIP RESISTANT PRODUCT**

(71) Applicant: Omya International AG, 4665 Oftringen (CH)
(72) Inventor: Bollström, Roger, 4800 Zofingen (CH); Schoelkopf, Joachim, 5727 Oberkulm (CH)
(74) Representative: Müller-Dyck, Martina

(57) **Abstract**

The present invention relates to a method for increasing the slip resistance of a substrate, wherein a liquid treatment composition comprising at least one acid is deposited on a substrate comprising at least one external surface comprising a salifiable alkaline or alkaline earth compound.

## Description

The present invention relates to a method for increasing the slip resistance of a substrate, a substrate with a slip resistant surface, its use, and products containing the same.

Hard floor surfaces made from ceramic or concrete are easy to maintain and can withstand heavy traffic. However, the surfaces of these materials can become slippery, especially when they are soiled or wet. This is particularly a problem in doorways, kitchens, and bathrooms. In fact, slips and trips are the most common cause of injury at work, and on average, they cause over a third of all major injuries and over 40% of all reported injuries to members of the public (cf. Health and Safety Executive, "Assessing the slip resistance of flooring", GEIS2, 05/12).

Commonly used methods for improving the slip resistance of floor surfaces are etching treatments, sand blasting or grinding. However, these methods require the handling of toxic or corrosive materials such as hydrofluoric acid or may be very harsh to the surface to be treated. Furthermore, these methods often result in nonuniform surface modifications.

US 6,673, 417 B1 describes an anti-slip floor tile comprising a top surface which is textured with a pattern of spikes. A slip resistant treatment for concrete, glazed enamel or porcelain surfaces involving the use of a mixture of phosphoric acid and ammonium bifluoride in water is disclosed in US 5,423,910 A. US 5,842,815 A discloses a method of chemically treading surfaces to reduce their slipperiness, which includes the application of a solution of hydrofluoric acid and nitric acid and the subsequent application of a neutralising agent to a treading surface. A composition for etching a hard surface comprising a dihalide double salt and a dihalide double salt activator comprising a weakly ionised surfactant acid is described in WO 98/17600 A2.

EP 2 949 813 A1 relates to a method of manufacturing a surface-modified material, wherein a substrate, which comprises on at least one side a coating layer comprising a salifiable alkaline or alkaline earth compound, is treated with a liquid composition comprising an acid to form at least one surface-modified region on the coating layer.

For completeness, the applicant would like to mention the unpublished European patent application with filing number 15 159 107.0 in its name, which relates to a method of creating a hidden pattern, the unpublished European patent application with filing number 15 159 109.6 in its name, which relates to an inkjet printing method, the unpublished European patent application with filing number 15 196 085.3 in its name, which relates to a method of tagging a substrate, and the unpublished European patent application with filing number 15 196 143.0 in its name, which relates to a printed watermark.

In view of the foregoing, there remains a need in the art for methods for improving the slip resistance of floor coverings and other surfaces.

Accordingly, it is an object of the present invention to provide a method for improving the slip resistance of a surface. It is desirable that the method is easy to implement in existing print facilities, and is suitable for both small and large production volumes. Furthermore, it is desirable that the method can be used for a great variety of products, and does not affect the properties of the substrates in a negative way. It is also desirable that the method can be carried out on-site, for example, in order to renovate or improve existing surfaces. It is also desirable the method avoids the usage of hydrofluoric acid or other fluorine-containing compounds.

It is also an object of the present invention to provide a slip resistant surface which is durable and scratch resistant. It is desirable that the slip resistant surface is resistant against water and solvents. It is also desirable that the slip resistant surface does not contain irritating or toxic compounds.

The foregoing and other objects are solved by the subject-matter as defined herein in the independent claims.

According to one aspect of the present invention, a method for improving the slip resistance of a substrate is provided comprising the following steps:
a) providing a substrate, wherein the substrate comprises at least one external surface comprising a salifiable alkaline or alkaline earth compound,
b) providing a fluorine-free treatment composition comprising at least one acid, and
c) applying the treatment composition onto the at least one external surface of the substrate to form a slip resistant surface.

According to another aspect of the present invention, a substrate with a slip resistant surface, obtainable by a method according to the present invention, is provided.

According to still another aspect of the present invention, a product comprising a substrate with a slip resistant surface according to the present invention is provided, wherein the product is a floor covering, a roof covering, a wall covering, a tile, a tessera, a brick, a paving stone, a fair faced concrete surface, a stair, a step, a table, a shelf, a bath tub, a saucer, or a door mat.

According to still another aspect of the present invention, use of a substrate with a slip resistant surface according to the present invention in decorative applications, in artistic applications, in visual applications, in building applications, in reconstruction applications, or household applications is provided.

Advantageous embodiments of the present invention are defined in the corresponding sub-claims.

According to one embodiment the substrate is selected from the group consisting of metal, glass, marble, natural stone, dolomitic stone, engineered stone, composite stone, brick, concrete, ceramic, cement, porcelain, enamel, wood, engineered wood, wooden plastic composite, and combinations thereof. According to another embodiment the at least one external surface and the substrate of step a) are made from the same material.

According to one embodiment the salifiable alkaline or alkaline earth compound is an alkaline or alkaline earth oxide, an alkaline or alkaline earth hydroxide, an alkaline or alkaline earth alkoxide, an alkaline or alkaline earth methylcarbonate, an alkaline or alkaline earth hydroxycarbonate, an alkaline or alkaline earth bicarbonate, an alkaline or alkaline earth carbonate, or a mixtures thereof, preferably the salifiable alkaline or alkaline earth compound is an alkaline or alkaline earth carbonate being preferably selected from lithium carbonate, sodium carbonate, potassium carbonate, magnesium carbonate, calcium magnesium carbonate, calcium carbonate, or mixtures thereof, more preferably the salifiable alkaline or alkaline earth compound is calcium carbonate, and most preferably the salifiable alkaline or alkaline earth compound is a ground calcium carbonate, a precipitated calcium carbonate and/or a surface-treated calcium carbonate.

According to one embodiment the at least one acid is selected from the group consisting of hydrochloric acid, sulphuric acid, sulphurous acid, phosphoric acid, citric acid, oxalic acid, acetic acid, formic acid, sulphamic acid, tartaric acid, phytic acid, boric acid, succinic acid, suberic acid, benzoic acid, adipic acid, pimelic acid, azelaic acid, sebaic acid, isocitric acid, aconitic acid, propane-1,2,3-tricarboxylic acid, trimesic acid, glycolic acid, lactic acid, mandelic acid, acidic organosulfur compounds, acidic organophosphorus compounds, phosphonic acid, and mixtures thereof, preferably the at least one acid is selected from the group consisting of hydrochloric acid, sulphuric acid, sulphurous acid, phosphoric acid, oxalic acid, boric acid, suberic acid, succinic acid, sulphamic acid, tartaric acid, and mixtures thereof, more preferably the at least one acid is selected from the group consisting of sulphuric acid, phosphoric acid, boric acid, suberic acid, sulphamic acid, tartaric acid, and mixtures thereof, and most preferably the at least one acid is phosphoric acid and/or sulphuric acid.

According to one embodiment the treatment composition further comprises a printing ink, a pigmented ink, a colorant, a dye, metal ions, transition metal ions, a surfactant, a dispersant, a biocide, a corrosion inhibitor, a hydrophobising agent, a wax, a polymer and/or a polymerising composition. According to another embodiment the treatment composition comprises the at least one acid in an amount from 0.1 to 100 wt.-%, based on the total weight of the liquid treatment composition, preferably in an amount from 1 to 80 wt.-%, more preferably in an amount from 3 to 60 wt.-%, and most preferably in an amount from 10 to 50 wt.-%.

According to one embodiment the treatment composition is applied by spray coating, inkjet printing, offset printing, flexographic printing, screen printing, plotting, contact stamping, rotogravure printing, powder coating, spin coating, reverse gravure coating, slot coating, curtain coating, slide bed coating, film press, metered film press, blade coating, brush coating and/or a pencil, preferably by inkjet printing or spray coating. According to another embodiment the treatment composition is continuously applied to the entire at least one external surface.

According to one embodiment the treatment composition is applied onto the at least one external surface in form of a preselected pattern, preferably in form of a channel, a barrier, an array, an one-dimensional bar code, a two-dimensional bar code, a three-dimensional bar code, a security mark, a label, a number, a letter, an alphanumeric symbol, a logo, an image, a shape, a design, or a combination thereof. According to another embodiment the substrate comprises the salifiable alkaline or alkaline earth compound in an amount at least 1 wt.-%, based on the total weight of the substrate, preferably at least 5 wt.-%, more preferably at least 10 wt.-%, even more preferably at least 25 wt.-%, and most preferably at least 50 wt.-%.

It should be understood that for the purpose of the present invention, the following terms have the following meaning.

For the purpose of the present invention, an "acid" is defined as Brønsted-Lowry acid, that is to say, it is an H₃O⁺ ion provider. An "acidic salt" is defined as an H₃O⁺ ion-provider, e.g., a hydrogen-containing salt, which is partially neutralised by an electropositive element. A "salt" is defined as an electrically neutral ionic compound formed from anions and cations. A "partially crystalline salt" is defined as a salt that, on XRD analysis, presents an essentially discrete diffraction pattern. In accordance with the present invention, pKₐ, is the symbol representing the acid dissociation constant associated with a given ionisable hydrogen in a given acid, and is indicative of the natural degree of dissociation of this hydrogen from this acid at equilibrium in water at a given temperature. Such pKₐ values may be found in reference textbooks such as Harris, D. C. "Quantitative Chemical Analysis: 3rd Edition", 1991, W.H. Freeman & Co. (USA), ISBN 0-7167-2170-8.

The term "treatment composition" as used herein, refers to a composition in dry or liquid form, which comprises at least one acid, and can be applied to an external surface of the substrate of the present invention.

For the purpose of the present invention, the term "fluorine-free" indicates the absence of any fluorine-containing compound. Examples of fluorine-containing compounds are hydrogen fluoride, hydrofluoric acid, boron trifluoride, alkaline fluorides, ammonium fluorides, alkaline hydrogen difluorides, ammonium hydrogen difluorides, or alkaline earth difluorides.

"Ground calcium carbonate" (GCC) in the meaning of the present invention is a calcium carbonate obtained from natural sources, such as limestone, marble, or chalk, and processed through a wet and/or dry treatment such as grinding, screening and/or fractionating, for example, by a cyclone or classifier.

"Modified calcium carbonate" (MCC) in the meaning of the present invention may feature a natural ground or precipitated calcium carbonate with an internal structure modification or a surface-reaction product, i.e. "surface-reacted calcium carbonate". A "surface-reacted calcium carbonate" is a material comprising calcium carbonate and water-insoluble, preferably at least partially crystalline, calcium salts of anions of acids on the surface. Preferably, the insoluble calcium salt extends from the surface of at least a part of the calcium carbonate. The calcium ions forming said at least partially crystalline calcium salt of said anion originate largely from the starting calcium carbonate material. MCCs are described, for example, in US 2012/0031576 A1, WO 2009/074492 A1, EP 2 264 109 A1, WO 00/39222 A1, or EP 2 264 108 A1.

"Precipitated calcium carbonate" (PCC) in the meaning of the present invention is a synthesised material, obtained by precipitation following reaction of carbon dioxide and lime in an aqueous, semi-dry or humid environment or by precipitation of a calcium and carbonate ion source in water. PCC may be in the vateritic, calcitic or aragonitic crystal form. PCCs are described, for example, in EP 2 447 213 A1, EP 2 524 898 A1, EP 2 371 766 A1, EP 1 712 597 A1, EP 1 712 523 A1, or WO 2013/142473 A1.

Throughout the present document, the "particle size" of a salifiable alkaline or alkaline earth compound is described by its distribution of particle sizes. The value *dₓ* represents the diameter relative to which x % by weight of the particles have diameters less than *dₓ.* This means that the *d*₂₀ value is the particle size at which 20 wt.-% of all particles are smaller, and the *d*₇₅ value is the particle size at which 75 wt.-% of all particles are smaller. The dso value is thus the weight median particle size, i.e. 50 wt.-% of all grains are bigger and the remaining 50 wt.-% are smaller than this particle size. For the purpose of the present invention the particle size is specified as weight median particle size *d*₅₀ unless indicated otherwise. For determining the weight median particle size *d*₅₀ value a Sedigraph can be used. The method and the instrument are known to the skilled person and are commonly used to determine grain size of fillers and pigments. The samples are dispersed using a high speed stirrer and ultrasonics.

A "specific surface area (SSA)" of a salifiable alkaline or alkaline earth compound in the meaning of the present invention is defined as the surface area of the compound divided by its mass. As used herein, the specific surface area is measured by nitrogen gas adsorption using the BET isotherm (ISO 9277:2010) and is specified in m²/g.

For the purpose of the present invention, a "rheology modifier" is an additive that changes the rheological behaviour of a slurry or a liquid coating composition to match the required specification for the coating method employed.

A "salifiable" compound in the meaning of the present invention is defined as a compound that is capable of reacting with an acid to form a salt. Examples of salifiable compounds are alkaline or alkaline earth oxides, hydroxides, alkoxides, methylcarbonates, hydroxycarbonates, bicarbonates, or carbonates.

For the purpose of the present invention, the term "surface-modified region" refers to a distinct spatial area, in which the salifiable alkaline or alkaline earth compound of the external surface has been at least partially converted into an acid salt as a result of the application of the treatment composition comprising at least one acid. Accordingly, a "surface-modified region" in the meaning of the present invention comprises at least one acid salt of the salifiable alkaline or alkaline earth compound of the external surface and the at least one acid comprised in the liquid treatment composition. The surface-modified region will have a different chemical composition and crystal structure compared to the original material.

In the meaning of the present invention, a "surface-treated calcium carbonate" is a ground, precipitated or modified calcium carbonate comprising a treatment or coating layer, e.g. a layer of fatty acids, surfactants, siloxanes, or polymers.

For the purpose of the present invention, the term "viscosity" or "Brookfield viscosity" refers to Brookfield viscosity. The Brookfield viscosity is for this purpose measured by a Brookfield DV-II+ Pro viscometer at 25°C ± 1°C at 100 rpm using an appropriate spindle of the Brookfield RV-spindle set and is specified in mPa·s. Based on his technical knowledge, the skilled person will select a spindle from the Brookfield RV-spindle set which is suitable for the viscosity range to be measured. For example, for a viscosity range between 200 and 800 mPa·s the spindle number 3 may be used, for a viscosity range between 400 and 1 600 mPa·s the spindle number 4 may be used, for a viscosity range between 800 and 3 200 mPa·s the spindle number 5 may be used, for a viscosity range between 1 000 and 2 000 000 mPa·s the spindle number 6 may be used, and for a viscosity range between 4 000 and 8 000 000 mPa·s the spindle number 7 may be used.

A "suspension" or "slurry" in the meaning of the present invention comprises insoluble solids and water, and optionally further additives, and usually contains large amounts of solids and, thus, is more viscous and can be of higher density than the liquid from which it is formed.

Where the term "comprising" is used in the present description and claims, it does not exclude other elements. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Terms like "obtainable" or "definable" and "obtained" or "defined" are used interchangeably. This, e.g., means that, unless the context clearly dictates otherwise, the term "obtained" does not mean to indicate that, e.g., an embodiment must be obtained by, e.g. the sequence of steps following the term "obtained" even though such a limited understanding is always included by the terms "obtained" or "defined" as a preferred embodiment.

According to the present invention, a method for improving the slip resistance of a substrate is provided. The method comprises the steps of a) providing a substrate, wherein the substrate comprises at least one external surface comprising a salifiable alkaline or alkaline earth compound, b) providing a fluorine-free treatment composition comprising at least one acid, and c) applying the treatment composition onto the at least one external surface of the substrate to form a slip resistant surface.

In the following the details and preferred embodiments of the inventive method will be set out in more details. It is to be understood that these technical details and embodiments also apply to the inventive substrate with a slip resistant surface and the inventive use thereof as well as to products containing the same.

### Method step a)

According to step a) of the method of the present invention, a substrate is provided, wherein the substrate comprises at least one external surface comprising a salifiable alkaline or alkaline earth compound. The substrate may be opaque, translucent, or transparent.

According to one embodiment, the substrate is selected from the group consisting of metal, glass, marble, natural stone, dolomitic stone, engineered stone, composite stone, brick, concrete, ceramic, cement, porcelain, enamel, wood, engineered wood, wooden plastic composite, and combinations thereof. However, any other substrate having a surface suitable for printing, coating or painting on may also be used.

Examples of suitable natural stone substrates are substrates made from slate, marble, limestone, travertine, granite, quartz, dolomite, or sandstone. However, any other natural stone may also be used. Examples of other suitable rock materials are mentioned below.

"Dolomite" in the meaning of the present invention is a calcium carbonate containing mineral, namely a carbonic calcium-magnesium-mineral, having the chemical composition of CaMg(CO₃)₂ ("CaCO₃ - MgCO₃"). A dolomite mineral may contain at least 30.0 wt.-% MgCO₃, based on the total weight of dolomite, preferably more than 35.0 wt.-%, and more preferably more than 40.0 wt.-% MgCO₃. "Engineered stone" in the meaning of the present invention is a composite material made of crushed stone bound together by an adhesive or binder, for example, a polymer resin. Typically, engineered stone is produced from marble and/or quartz. However, any other rock material may be present. Examples of other suitable rock materials are mentioned below. An example of a composite stone is terrazzo.

According to the present invention, the substrate provided in step a) comprises at least one external surface comprising a salifiable alkaline or alkaline earth compound. The amount of the salifiable alkaline or alkaline earth compound in the at least one external surface can range from 1 to 99 wt.-%, based on the total weight of the substrate, preferably from 2 to 90 wt.-%, more preferably from 3 to 70 wt.-%, even more preferably from 5 to 50 wt.-%, and most preferably from 8 to 40 wt.-%.

The at least one external surface may be a laminate or a coating layer, comprising a salifiable alkaline or alkaline earth compound. The laminate or the coating layer can be in direct contact with the surface of the substrate.

For the purpose of the present invention, a "laminate" refers to a sheet of material, which can be applied over a substrate and bonded to the substrate, thereby forming a laminated substrate. A "coating layer" in the meaning of the present invention refers to a layer, covering, film, skin etc., formed, created, prepared etc., from a coating formulation which remains predominantly on one side of the substrate. The coating layer can be in direct contact with the surface of the substrate or, in case the substrate comprises one or more precoating layers and/or barrier layers, can be in direct contact with the top precoating layer or barrier layer, respectively.

According to a preferred embodiment the at least one external surface and the substrate of step a) are made from the same material. Thus, according to a preferred embodiment of the present invention the substrate comprises a salifiable alkaline or alkaline earth compound. The at least one external surface can be simply the external surface of the substrate or can be a laminate or a coating layer made from the same material as the substrate. According to a preferred embodiment, the at least one external surface is the external surface of the substrate.

The amount of the salifiable alkaline or alkaline earth compound in the at least one external surface can range from 1 to 99 wt.-%, based on the total weight of the at least one external surface, preferably from 45 to 98 wt.-%, and more preferably from 60 to 97 wt.-%.

According to one embodiment, the substrate comprises a coating layer comprising the salifiable alkaline or alkaline earth compound in an amount from 1 to 99 wt.-%, based on the total weight of the coating layer, preferably from 5 to 98 wt.-%, more preferably from 10 to 97 wt.-%, even more preferably from 20 to 96 wt.-%, and most preferably from 30 to 95 wt.-%. According to another embodiment, the substrate comprises a laminate comprising the salifiable alkaline or alkaline earth compound in an amount from 1 to 99 wt.-%, based on the total weight of the laminate, preferably from 5 to 98 wt.-%, more preferably from 10 to 97 wt.-%, even more preferably from 20 to 96 wt.-%, and most preferably from 30 to 95 wt.-%.

According to a preferred embodiment, the substrate comprises the salifiable alkaline or alkaline earth compound in form of a filler material. The amount of the salifiable alkaline or alkaline earth compound in the substrate can range from 1 to 99 wt.-%, based on the total weight of the substrate, preferably from 5 to 98 wt.-%, more preferably from 10 to 97 wt.-%, even more preferably from 20 to 96 wt.-%, and most preferably from 30 to 95 wt.-%. According to one embodiment the amount of the salifiable alkaline or alkaline earth compound in the substrate ranges from 50 to 99 wt.-%, based on the total weight of the substrate. According to another embodiment, the substrate comprises the salifiable alkaline or alkaline earth compound in form of a filler material and the amount of the salifiable alkaline or alkaline earth compound is at least 20 wt.-%, based on the total weight of the substrate, preferably at least 40 wt.-%, more preferably at least 60 wt.-%, even more preferably at least 80 wt.-%, and most preferably at least 90 wt.-%.

According to one embodiment, the salifiable alkaline or alkaline earth compound is an alkaline or alkaline earth oxide, an alkaline or alkaline earth hydroxide, an alkaline or alkaline earth alkoxide, an alkaline or alkaline earth methylcarbonate, an alkaline or alkaline earth hydroxycarbonate, an alkaline or alkaline earth bicarbonate, an alkaline or alkaline earth carbonate, or a mixture thereof. Preferably, the salifiable alkaline or alkaline earth compound is an alkaline or alkaline earth carbonate.

The alkaline or alkaline earth carbonate may be selected from lithium carbonate, sodium carbonate, potassium carbonate, magnesium carbonate, calcium magnesium carbonate, calcium carbonate, or mixtures thereof. According to one embodiment, the alkaline or alkaline earth carbonate is calcium carbonate, more preferably the alkaline or alkaline earth carbonate is a ground calcium carbonate, a precipitated calcium carbonate, a modified calcium carbonate and/or a surface-treated calcium carbonate, and most preferably a ground calcium carbonate, a precipitated calcium carbonate and/or a surface-treated calcium carbonate. According to a preferred embodiment, the calcium carbonate is ground calcium carbonate.

Ground (or natural) calcium carbonate (GCC) is understood to be manufactured from a naturally occurring form of calcium carbonate, mined from sedimentary rocks such as limestone or chalk, or from metamorphic marble rocks, eggshells or seashells. Calcium carbonate is known to exist as three types of crystal polymorphs: calcite, aragonite and vaterite. Calcite, the most common crystal polymorph, is considered to be the most stable crystal form of calcium carbonate. Less common is aragonite, which has a discrete or clustered needle orthorhombic crystal structure. Vaterite is the rarest calcium carbonate polymorph and is generally unstable. Ground calcium carbonate is almost exclusively of the calcitic polymorph, which is said to be trigonal-rhombohedral and represents the most stable of the calcium carbonate polymorphs. The term "source" of the calcium carbonate in the meaning of the present application refers to the naturally occurring mineral material from which the calcium carbonate is obtained. The source of the calcium carbonate may comprise further naturally occurring components such as magnesium carbonate, alumino silicate etc.

According to one embodiment of the present invention the GCC is obtained by dry grinding. According to another embodiment of the present invention the GCC is obtained by wet grinding and optionally subsequent drying.

In general, the grinding step can be carried out with any conventional grinding device, for example, under conditions such that comminution predominantly results from impacts with a secondary body, i.e. in one or more of: a ball mill, a rod mill, a vibrating mill, a roll crusher, a centrifugal impact mill, a vertical bead mill, an attrition mill, a pin mill, a hammer mill, a pulveriser, a shredder, a de-clumper, a knife cutter, or other such equipment known to the skilled man. In case the calcium carbonate comprising mineral material comprises a wet ground calcium carbonate comprising mineral material, the grinding step may be performed under conditions such that autogenous grinding takes place and/or by horizontal ball milling, and/or other such processes known to the skilled man. The wet processed ground calcium carbonate comprising mineral material thus obtained may be washed and dewatered by well-known processes, e.g. by flocculation, centrifugation, filtration or forced evaporation prior to drying. The subsequent step of drying may be carried out in a single step such as spray drying, or in at least two steps. It is also common that such a mineral material undergoes a beneficiation step (such as a flotation, bleaching or magnetic separation step) to remove impurities.

According to one embodiment of the present invention, the ground calcium carbonate is selected from the group consisting of marble, chalk, dolomite, limestone and mixtures thereof.

According to one embodiment of the present invention, the calcium carbonate comprises one type of ground calcium carbonate. According to another embodiment of the present invention, the calcium carbonate comprises a mixture of two or more types of ground calcium carbonates selected from different sources.

"Precipitated calcium carbonate" (PCC) in the meaning of the present invention is a synthesized material, generally obtained by precipitation following reaction of carbon dioxide and lime in an aqueous environment or by precipitation of a calcium and carbonate ion source in water or by precipitation of calcium and carbonate ions, for example CaCl₂ and Na₂CO₃, out of solution. Further possible ways of producing PCC are the lime soda process, or the Solvay process in which PCC is a by-product of ammonia production. Precipitated calcium carbonate exists in three primary crystalline forms: calcite, aragonite and vaterite, and there are many different polymorphs (crystal habits) for each of these crystalline forms. Calcite has a trigonal structure with typical crystal habits such as scalenohedral (S-PCC), rhombohedral (R-PCC), hexagonal prismatic, pinacoidal, colloidal (C-PCC), cubic, and prismatic (P-PCC). Aragonite is an orthorhombic structure with typical crystal habits of twinned hexagonal prismatic crystals, as well as a diverse assortment of thin elongated prismatic, curved bladed, steep pyramidal, chisel shaped crystals, branching tree, and coral or worm-like form. Vaterite belongs to the hexagonal crystal system. The obtained PCC slurry can be mechanically dewatered and dried.

According to one embodiment of the present invention, the calcium carbonate comprises one precipitated calcium carbonate. According to another embodiment of the present invention, the calcium carbonate comprises a mixture of two or more precipitated calcium carbonates selected from different crystalline forms and different polymorphs of precipitated calcium carbonate. For example, the at least one precipitated calcium carbonate may comprise one PCC selected from S-PCC and one PCC selected from R-PCC.

According to another embodiment, the salifiable alkaline or alkaline earth compound may be surface-treated material, for example, a surface-treated calcium carbonate.

A surface-treated calcium carbonate may feature a ground calcium carbonate, a modified calcium carbonate, or a precipitated calcium carbonate comprising a treatment or coating layer on its surface. For example, the calcium carbonate may be treated or coated with a hydrophobising agent such as, e.g., aliphatic carboxylic acids, salts or esters thereof, or a siloxane. Suitable aliphatic acids are, for example, C₅ to C₂₈ fatty acids such as stearic acid, palmitic acid, myristic acid, lauric acid, or a mixture thereof. The calcium carbonate may also be treated or coated to become cationic or anionic with, for example, a polyacrylate or polydiallyldimethyl-ammonium chloride (polyDADMAC). Surface-treated calcium carbonates are, for example, described in EP 2 159 258 A1 or WO 2005/121257 A1. Additionally or alternatively, the hydrophobising agent can be at least one mono-substituted succinic acid and/or salty reaction product(s) and/or at least one phosphoric acid ester blend of one or more phosphoric acid mono-ester and/or reaction products thereof and one or more phosphoric acid di-ester and/or reaction products thereof. Methods for treating a calcium carbonate-comprising material with these hydrophobising agents are described, for example, in EP 2 722 368 A1 and EP 2 770 017 A1.

According to a preferred embodiment of the present invention, in step a) a substrate is provided, wherein the substrate comprises at least one external surface comprising calcium carbonate, preferably ground calcium carbonate, precipitated calcium carbonate and/or surface-treated calcium carbonate. According to a further preferred embodiment, the at least one external surface is a coating layer or a laminate comprising calcium carbonate, preferably ground calcium carbonate, precipitated calcium carbonate and/or surface-treated calcium carbonate.

According to one embodiment, the salifiable alkaline or alkaline earth compound is in form of particles having a weight median particle size *d*₅₀ from 15 nm to 200 µm, preferably from 20 nm to 100 µm, more preferably from 50 nm to 50 µm, and most preferably from 100 nm to 2 µm.

According to one embodiment, the salifiable alkaline or alkaline earth compound has a specific surface area (BET) from 4 to 120 m²/g, preferably from 8 to 50 m²/g, as measured using nitrogen adsorption in the BET method, according to ISO 9277.

According to one embodiment, the at least one external surface further comprises a polymeric binder. For example, the polymeric binder may be a hydrophilic polymer such as, for example, polyvinyl alcohol, polyvinyl pyrrolidone, gelatin, cellulose ethers, polyoxazolines, polyvinylacetamides, partially hydrolyzed polyvinyl acetate/vinyl alcohol, polyacrylic acid, polyacrylamide, polyalkylene oxide, sulphonated or phosphated polyesters and polystyrenes, casein, zein, albumin, chitin, chitosan, dextran, pectin, collagen derivatives, collodion, agar-agar, arrowroot, guar, carrageenan, starch, tragacanth, xanthan, or rhamsan and mixtures thereof. It is also possible to use other binders such as hydrophobic materials, for example, poly(styrene-co-butadiene), polyurethane latex, polyester latex, poly(n-butyl acrylate), poly(n-butyl methacrylate), poly(2-ethylhexyl acrylate), copolymers of n-butylacrylate and ethylacrylate, copolymers of vinylacetate and n-butylacrylate, and the like and mixtures thereof. Further examples of suitable binders are homopolymers or copolymers of acrylic and/or methacrylic acids, itaconic acid, and acid esters, such as, e.g. ethylacrylate, butyl acrylate, styrene, unsubstituted or substituted vinyl chloride, vinyl acetate, ethylene, butadiene, acrylamides and acrylonitriles, silicone resins, water dilutable alkyd resins, acrylic/alkyd resin combinations, natural oils such as linseed oil, and mixtures thereof.

Other optional additives that may be present in the external surface are, for example, additional fillers, dispersants, milling aids, surfactants, rheology modifiers, lubricants, defoamers, optical brighteners, dyes, preservatives, or pH controlling agents. Examples for additional fillers are kaolin, silica, talc, plastic pigments.

In addition or alternatively, any rock material known to the skilled person may be present in the external surface and/or the substrate. Examples of suitable rock materials are adakite, andesite, alkali feldspar granite, anorthosite, aplite, basalt, basanite, boninite, carbonatite, charnockite, dacite, diabase or dolerite, diorite, napoleonite, dunite, essexite, foidolite, gabbro, granite, granodiorite, granophyre, harzburgite, hornblendite, hyaloclastite, icelandite, ignimbrite, ijolite, kimberlite, komatiite, lamproite, lamprophyre, latite, lherzolite, monzogranite, monzonite, nepheline syenite, nephelinite, norite, obsidian, pegmatite, peridotite, phonolite, picrate, porphyry, pumice, pyroxenite, quartz diorite, quartz monzonite, rhyodacite, rhyolite, scoria, sovite, syenite, tachylyte, tephrite, tonalite, trachyandesite, trachyte, troctolite, trondhjemite, tuff, websterite, wehrlite, argillite, arkose, calcarenite, chalk, chert, flint, claystone, coal, conglomerate, coquina, diatomite, dolomite or dolostone, evaporate, geyserite, greywacke, gritstone, itacolumite, jaspillite, laterite, marl, mudstone, sandstone, shale, siltstone, tillite, tufa, turbidite, wackestone, anthracite, amphibolite, blueschist, cataclasite eclogite, gneiss, granulite, greenschist, hornfels, litchfieldite, marble, migmatite, mylonite, metapelite, metapsammite, phyllite, pseudotachylite, quartzite, schist, serpentinite, skarn, slate, suevite, talc carbonate, or whiteschist.

### Method step b)

According to step b) of the method of the present invention, a fluorine-free treatment composition comprising at least one acid is provided.

According to the present invention the treatment composition is fluorine-free, which means that the treatment composition does not contain a fluorine-containing compound. Examples of fluorine-containing compounds are hydrogen fluoride, hydrofluoric acid, boron trifluoride, alkaline fluorides, ammonium fluorides, alkaline hydrogen difluorides, ammonium hydrogen difluorides, or alkaline earth difluorides. The treatment composition may comprise any inorganic or organic acid that forms CO₂ when it reacts with a salifiable alkaline or alkaline earth compound. According to one embodiment, the at least one acid is an organic acid, preferably a monocarboxylic, dicarboxylic or tricarboxylic acid.

According to one embodiment, the at least one acid is a strong acid having a pKₐ of 0 or less at 20°C. According to another embodiment, the at least one acid is a medium-strong acid having a pKₐ value from 0 to 2.5 at 20°C. If the pKₐ at 20°C is 0 or less, the acid is preferably selected from sulphuric acid, hydrochloric acid, or mixtures thereof. If the pKₐ at 20°C is from 0 to 2.5, the acid is preferably selected from H₂SO₃, H₃PO₄, oxalic acid, or mixtures thereof. However, acids having a pKₐ of more than 2.5 may also be used, for example, suberic acid, succinic acid, acetic acid, citric acid, formic acid, sulphamic acid, tartaric acid, benzoic acid, or phytic acid.

The at least one acid can also be an acidic salt, for example, HSO₄⁻, H₂PO₄⁻ or HPO₄²⁻, being at least partially neutralized by a corresponding cation such as Li⁺, Na^{+,} K⁺, Mg²⁺ or Ca²⁺. The at least one acid can also be a mixture of one or more acids and one or more acidic salts.

According to one embodiment of the present invention, the at least one acid is selected from the group consisting of hydrochloric acid, sulphuric acid, sulphurous acid, phosphoric acid, citric acid, oxalic acid, acetic acid, formic acid, sulphamic acid, tartaric acid, phytic acid, boric acid, succinic acid, suberic acid, benzoic acid, adipic acid, pimelic acid, azelaic acid, sebaic acid, isocitric acid, aconitic acid, propane-1,2,3-tricarboxylic acid, trimesic acid, glycolic acid, lactic acid, mandelic acid, acidic organosulphur compounds, acidic organophosphorus compounds, HSO₄⁻, H₂PO₄⁻ or HPO₄²⁻, being at least partially neutralized by a corresponding cation selected from Li⁺, Na⁺, K⁺, Mg²⁺ or Ca²⁺, phosphonic acid, and mixtures thereof. According to a preferred embodiment, the at least one acid is selected from the group consisting of hydrochloric acid, sulphuric acid, sulphurous acid, phosphoric acid, oxalic acid, boric acid, suberic acid, succinic acid, sulphamic acid, tartaric acid, and mixtures thereof, more preferably the at least one acid is selected from the group consisting of sulphuric acid, phosphoric acid, boric acid, suberic acid, sulphamic acid, tartaric acid, and mixtures thereof, and most preferably the at least one acid is phosphoric acid and/or sulphuric acid.

Acidic organosulphur compounds may be selected from sulphonic acids such as Nafion, p-toluenesulphonic acid, methanesulphonic acid, thiocarboxylic acids, sulphinic acids and/or sulphenic acids. Examples for acidic organophosphorus compounds are aminomethylphosphonic acid, 1-hydroxyethylidene-1,1-diphosphonic acid (HEDP), amino tris(methylenephosphonic acid) (ATMP), ethylenediamine tetra(methylene phosphonic acid) (EDTMP), tetramethylenediamine tetra(methylene phosphonic acid) (TDTMP), hexamethylenediamine tetra(methylene phosphonic acid) (HDTMP), diethylenetriamine penta(methylene phosphonic acid) (DTPMP), phosphonobutane-tricarboxylic acid (PBTC), N-(phosphonomethyl)iminodiacetic acid (PMIDA), 2-carboxyethyl phosphonic acid (CEPA), 2-hydroxyphosphonocarboxylic acid (HPAA), amino-tris-(methylenephosphonic acid) (AMP), or di-(2-ethylhexyl)phosphoric acid.

According to one embodiment the at least one acid is a deliquescent acid. The term "deliquescent acid" as used herein refers to an acid in solid form that has a high affinity for moisture and can collect gaseous water molecules from the atmosphere to form a mixture of the solid acid and liquid water, or an aqueous solution of the acid, until the substance is dissolved (cf. definition of "deliquescence", IUPAC, Compendium of Chemical Terminology Goldbook, version 2.3.3, 2014). An example of a solid deliquescent acid is phosphonic acid.

The at least one acid may consist of only one type of acid. Alternatively, the at least one acid can consist of two or more types of acids.

The treatment composition may be provided in dry or in liquid form. According to a preferred embodiment, the treatment composition is provided in liquid form. For example, the treatment composition may be provided in form an aqueous solution.

The at least one acid may be applied in concentrated form or in diluted form. According to one embodiment of the present invention, the liquid treatment composition comprises at least one acid and water. According to another embodiment of the present invention, the liquid treatment composition comprises at least one acid and a solvent. According to another embodiment of the present invention, the liquid treatment composition comprises at least one acid, water, and a solvent. Suitable solvents are known in the art and are, for example, aliphatic alcohols, ethers and diethers having from 4 to 14 carbon atoms, glycols, alkoxylated glycols, glycol ethers, alkoxylated aromatic alcohols, aromatic alcohols, mixtures thereof, or mixtures thereof with water.

According to one exemplary embodiment, the treatment composition comprises phosphoric acid, ethanol, and water, preferably the treatment composition comprises 30 to 50 wt.-% phosphoric acid, 10 to 30 wt.-% ethanol, and 20 to 40 wt.-% water, based on the total weight of the treatment composition. According to another exemplary embodiment, the treatment composition comprises 20 to 40 vol.-% phosphoric acid, 20 to 40 vol.-% ethanol, and 20 to 40 vol.-% water, based on the total volume of the treatment composition.

According to one exemplary embodiment, the treatment composition comprises sulphuric acid, ethanol, and water, preferably the treatment composition comprises 1 to 10 wt.-% sulphuric acid, 10 to 30 wt.-% ethanol, and 70 to 90 wt.-% water, based on the total weight of the treatment composition. According to another exemplary embodiment, the treatment composition comprises 10 to 30 vol.-% sulphuric acid, 10 to 30 vol.-% ethanol, and 50 to 80 vol.-% water, based on the total volume of the treatment composition.

According to one embodiment, the treatment composition comprises the at least one acid in an amount from 0.1 to 100 wt.-%, based on the total weight of the treatment composition, preferably in an amount from 1 to 80 wt.-%, more preferably in an amount from 2 to 50 wt.-%, and most preferably in an amount from 5 to 30 wt.-%.

In addition to the at least one acid, the treatment composition may further comprise a printing ink, a pigmented ink, a colorant, a fluorescent dye, a phosphorescent dye, an ultraviolet absorbing dye, a near infrared absorbing dye, a thermochromic dye, a halochromic dye, metal ions, transition metal ions, magnetic particles, or a mixture thereof. Such additional compounds can equip the created slip resistant surface with additional features, such as specific light absorbing properties, magnetic properties, anti-fungal properties, or anti-bacterial properties.

### Method step c)

According to method step c), the treatment composition is applied onto the at least one external surface to form a slip resistant surface. Thereby, at least one surface-modified region is formed on or within the at least one external surface.

Without being bound to any theory, it is believed that by the application of the treatment composition to the external surface, the salifiable alkaline or alkaline earth compound of the external surface reacts with the acid included in the treatment composition. Thereby the salifiable alkaline or alkaline earth compound is at least partially converted into an acid salt, which has a different chemical composition and crystal structure compared to the original material. In case the salifiable alkaline or alkaline earth compound is an alkaline or alkaline earth carbonate, for example, the compound would be converted by the acid treatment into a non-carbonate alkaline or alkaline earth salt.

By applying the treatment composition according to method step c), the salifiable alkaline or alkaline earth compound can be converted into a water-insoluble or water-soluble salt.

According to one embodiment, the surface-modified region comprises an acid salt of the salifiable alkaline or alkaline earth compound. According to another embodiment, the surface-modified region comprises a non-carbonate alkaline or alkaline earth salt, preferably a water-insoluble non-carbonate alkaline or alkaline earth salt. According to a preferred embodiment, the surface-modified region comprises a non-carbonate calcium salt, preferably a water-insoluble non-carbonate calcium salt. In the meaning of the present invention "water-insoluble" materials are defined as materials which, when mixed with deionised water and filtered on a filter having a 0.2 µm pore size at 20°C to recover the liquid filtrate, provide less than or equal to 0.1 g of recovered solid material following evaporation at 95 to 100°C of 100 g of said liquid filtrate. "Water-soluble" materials are defined as materials leading to the recovery of greater than 0.1 g of recovered solid material following evaporation at 95 to 100°C of 100 g of said liquid filtrate.

According to one embodiment of the present invention, the treatment composition comprises phosphoric acid, and the obtained slip resistant surface comprises at least one alkaline or alkaline earth phosphate. According to a preferred embodiment, the at least one alkaline or alkaline earth compound is calcium carbonate, the treatment composition comprises phosphoric acid, and the obtained slip resistant surface comprises hydroxyapatite, calcium hydrogen phosphate hydrate calcium phosphate, brushite, and combinations thereof, preferably calcium phosphate and/or brushite. According to another embodiment of the present invention, the treatment composition comprises sulphuric acid, and the obtained slip resistant surface comprises at least one alkaline or alkaline earth sulphate. According to a preferred embodiment, the at least one alkaline or alkaline earth compound is calcium carbonate, the treatment composition comprises sulphuric acid, and the obtained slip resistant surface comprises gypsum.

The treatment composition can be applied onto the at least one external surface by any suitable method known in the art. According to a preferred embodiment, the treatment composition is applied in form of a liquid treatment composition.

According to one embodiment, the treatment composition is applied by spray coating, inkjet printing, offset printing, flexographic printing, screen printing, plotting, contact stamping, rotogravure printing, powder coating, spin coating, reverse gravure coating, slot coating, curtain coating, slide bed coating, film press, metered film press, blade coating, brush coating and/or a pencil. Preferably, the treatment composition is applied by spray coating. According to one embodiment the spray coating is combined with a shutter in order to create a pattern. According to another embodiment, the treatment composition is applied by inkjet printing, preferably continuous inkjet printing, intermittent inkjet printing and/or drop-on-demand inkjet printing.

The liquid treatment composition can be applied onto the at least one external surface by depositing the treatment composition onto the top of the at least one external surface.

The treatment composition can be applied in form of a continuous layer or a pattern. According to one embodiment of the present invention, the treatment composition is continuously applied to the entire at least one external surface. Thereby, a continuous surface-modified region or layer can be formed above the at least one external surface.

According to one embodiment, the treatment composition is applied onto the at least one external surface of the substrate in form of a pattern. The pattern can be an one-dimensional bar code, a two-dimensional bar code, a three-dimensional bar code, a security mark, a label, a number, a letter, an alphanumeric symbol, a logo, an image, a shape, a design, or a combination thereof. The pattern may have a resolution of more than 10 dpi, preferably more than 50 dpi, more preferably more than 100 dpi, even more preferably more than 1 000 dpi, and most preferably more than 10 000 dpi, wherein dpi means dots per inch.

According to another embodiment, the treatment composition is applied to the at least one external surface in form of a pattern of repetitive elements, preferably selected from the group consisting of circles, dots, triangles, rectangles, squares, or lines.

The application of the treatment composition onto the at least one external surface can be carried out at a surface temperature of the substrate, which is at room temperature, i.e. at a temperature of 20±2°C, or at an elevated temperature, for example, at about 70°C. Carrying out method step b) at an elevated temperature may enhance the drying of the treatment composition, and, hence, may reduce production time. According to one embodiment, method step b) is carried out at a substrate surface temperature of more than 5°C, preferably more than 10°C, more preferably more than 15°C, and most preferably more than 20°C. According to one embodiment, method step b) is carried out at a substrate surface temperature which is in the range from 5 to 120°C, more preferably in the range from 10 to 100°C, more preferably in the range from 15 to 90°C, and most preferably in the range from 20 to 80°C.

According to one embodiment, the treatment composition is a liquid treatment composition and is applied by inkjet printing. The inkjet printing technology may provide the possibility to place very small droplets on the external surface, which allows to create high resolution patterns on and/or within the coating layer. According to one embodiment, the treatment composition is a liquid treatment composition and the liquid treatment composition is applied to the external surface in form of droplets. Depending on the inkjet printer, the droplets may have a volume in the range from 10 µl down to 0.5 pl. According to one embodiment, the droplets have a volume of less than or equal to 10 µl, preferably less than or equal to 100 nl, more preferably less than or equal to 1 nl, even more preferably less than or equal to 10 pl, and most preferably less than or equal to 0.5 pl. For example, the droplets may have a volume from 10 µl down to 1 µl, from 1 µl to 100 nl, from 100 nl to 10 nl, from 10 nl to 1 nl, from 1 nl to 100 pl, from 100 pl to 10 pl, from 10 pl to 1 pl, or of about 0.5 pl. According to another embodiment, the liquid treatment composition is applied to the at least one external surface in form of droplets to form surface-modified pixels on and/or within the at least one external surface. The pixels may have a diameter of less than 5 mm, preferably less than 1 000 µm, more preferably less than 200 µm, and most preferably less than 100 µm, or even less than 10 µm.

According to one embodiment, the liquid treatment composition is deposited by inkjet printing with a drop spacing of less than or equal to 1 000 µm. According to one embodiment the drop spacing is from 10 nm to 500 µm, preferably from 100 nm to 300 µm, more preferably from 1 µm to 200 µm, and most preferably from 5 µm to 100 µm. According to another embodiment, the drop spacing is less than 800 µm, more preferably less than 600 µm, even more preferably less than 400 µm, and most preferably less than 80 µm. According to still another embodiment, the drop spacing is less than 500 nm, more preferably less than 300 nm, even more preferably less than 200 nm, and most preferably less than 80 nm. The drop spacing can also be zero, which means that the drops are coincident.

The inventors surprisingly found that by using the inkjet printing technology very small drops of the treatment composition can be applied onto the at least one external surface, which provides to the possibility of converting even small areas of the external surface very precisely and locally without affecting the surrounding surface structure. Thereby, high resolution patterns can be created on the at least one external surface. Moreover, the method of the present invention has the advantage that it can be carried out with conventional inkjet printers just by replacing the conventional ink by the liquid treatment composition of the present invention. Thus, the method of the present invention can be implemented in existing print facilities and does not require cost-intensive and time-consuming modifications of existing inkjet printing lines.

According to another embodiment the treatment composition is applied to the at least external surface in dry form. In case the at least one acid is a deliquescent acid, it may absorb gaseous water molecules from the surrounding atmosphere, in which the method is carried out, and/or from the substrate to be treated. These absorbed water molecules may be sufficient to allow the formation of a surface-modified region, i.e. a slip resistant surface, on the substrate. Alternatively or additionally, water may be added from an external source to enable the formation of the slip resistant surface.

According to one embodiment, the at least one acid is a deliquescent acid and the substrate provided in step a) comprises water in an amount from 1 to 80 wt.-%, based on the total weight of the substrate, preferably from 2 to 50 wt.-%, more preferably from 3 to 20 wt.-%, and most preferably from 5 to 10 wt.-%. For example, the substrate provided in step a) may be a moist natural stone, engineered stone, composite stone, brick, concrete, or cement.

According to a further embodiment, during method step c) water is applied from an external source. In other words the treatment composition is applied to the at least one external surface in the presence of water. This may be achieved, for example, by spraying water onto the at least one external surface with any common spraying means known in the art or by subjecting the at least one external surface during or after step c) to water vapour.

According to another embodiment, the at least one acid is a deliquescent salt and the at least one external surface is subjected during or after step c) to water vapour over a time period of from 1 s to 24 h, preferably from 5 s to 1 h, more preferably from 30 s to 30 min, and most preferably from 1 min to 10 min, in an atmosphere with an absolute humidity of from 1 g/m³ to 100 g/m³, preferably of from 3 g/m³ to 80 g/m³, more preferably from 5 g/m³ to 60 g/m³, and most preferably from 10 g/m³ to 30 g/m³. In this context, the "absolute humidity" is defined as the water content in the air expressed in gram per cubic meter. Hygrometers to measure the absolute humidity of the air are known to the person skilled in the art.

According to one embodiment of the present invention, method step c) is carried out two or more times using a different or the same liquid treatment composition. Thereby, different patterns with different properties can be created.

### The substrate with a slip resistant surface

According to one aspect of the present invention, a substrate with a slip resistant surface, obtainable by a method according to the present invention, is provided.

According to one embodiment a method of manufacturing a substrate with a slip resistant surface is provided, the method comprising the following steps:
a) providing a substrate, wherein the substrate comprises at least one external surface comprising a salifiable alkaline or alkaline earth compound,
b) providing a fluorine-free treatment composition comprising at least one acid, and
c) applying the treatment composition onto the at least one external surface of the substrate to form a slip resistant surface.

According to a further aspect of the present invention, a substrate with a slip resistant surface is provided, wherein the substrate comprises at least one external surface comprising a salifiable alkaline or alkaline earth compound, and wherein the slip resistant surface comprises at least one surface-modified region, wherein the at least one surface-modified region comprises an acid salt of the salifiable alkaline or alkaline earth compound. Preferably, the salifiable alkaline or alkaline earth compound is an alkaline or alkaline earth carbonate, preferably a calcium carbonate, and the surface-modified region comprises a non-carbonate alkaline or alkaline earth salt, preferably a non-carbonate calcium salt.

The inventors of the present invention surprisingly found that by the method of the present invention a modified surface area can be formed on the substrate surface, which has an increased surface-roughness, and thus, improved slip resistance, compared to the original substrate surface. It was also found that the slip resistant surface may be less prone to wear and may be resistant against water and solvents. Furthermore, it was found by the inventors that the inventive method can create a very uniform slip resistant surface. The slip resistant surface may also be scratch resistant.

The inventive method does not require the addition of hydrofluoric acid or other fluorine-containing compounds, which may be toxic and highly corrosive. The inventive method may also avoid the formation of irritating or toxic compounds within the slip resistant surface.

Furthermore, it was surprisingly found by the inventors that the method can be used for a great variety of substrates, and does not affect the properties of the substrates in a negative way. The inventive method can be implemented in existing print facilities, for example, by simply replacing the treatment compositions, and is suitable for both small and large production volumes. It is also possible to carry the inventive method out on-site, for example, in order to renovate or improve existing surfaces. For example, the inventive method could be carried out by applying the treatment composition onto an existing floor covering.

Moreover, the inventive method provides the possibility to create a slip resistant surface on a substrate in form of a predetermined pattern. Thus, it is possible to provide the slip resistant surface in form, for example, of a decorative design or a logo. A further advantage of the present invention is that the created pattern can have an embossed structure due to the conversion of the salifiable alkaline or alkaline earth compound into the corresponding acid salt, which provides the possibility of creating patterns with different heights. For example, it would be possible to create a slip resistant surface consisting of a pattern of spikes.

The present invention also provides the possibility to equip the slip resistant surface with additional functionalities by adding further compounds to the treatment composition. For example, the slip-resistant surface may glow under UV light by adding a UV absorbing dye to the treatment composition. It would also be possible to equip the slip-resistant surface with anti-bacterial or anti-fungal properties by adding copper, silver or other metal particles to the treatment compositions.

According to the present invention, the term "slip resistance" refers to the coefficient of friction of a surface. The slip resistance of a surface can be measured by several methods known in the art.

For example, the slip resistance can be measured with a pendulum slip resistance tester according to ASTM E303-93 (United States), BS EN 13036-4:2011 (United Kingdom), or AS 4663:2013 and AS 4586:2013 (Australia) (cf. Wikipedia, "Floor slip resistance testing", 15 July 2016).

Many European flooring manufacturers use ramp-type tests to classify the slipperiness of their products before sale. Such tests are generally carried out using German National Standard test methods (DIN 51097:19924 and DIN 51130:20045). DIN 51097 involves the use of barefoot operators with a soap solution as the contaminant, and DIN 51130 uses heavily-cleated EN:ISO 20345 safety boots with motor oil contamination. According to DIN 51130:20045 the slipperiness is classified with R-values, wherein a value of R1 is the most slippery, and R13 the least slippery (cf. Health and Safety Executive, "Assessing the slip resistance of flooring", GEIS2, 05/12).

An indication of slipperiness in water-contaminated conditions may also be obtained by measuring the surface roughness *R_{z}* of a substrate surface. *R_{z}* is a measure of total surface roughness, calculated as the mean of several peak-to-valley measurements (cf. Health and Safety Executive, "Assessing the slip resistance of flooring", GEIS2, 05/12).

The surface roughness may also be expressed as standard surface roughness, also known to the skilled person as Sq , Rq or R(RMS), i.e. root mean square roughness.

As already mentioned above, the method of the present invention can be carried out on great variety of substrates, provided the substrate comprises at least one external surface comprising a salifiable alkaline or alkaline earth compound. According to a further aspect of the present invention, a product comprising a substrate with a slip resistant surface according to the present invention is provided, wherein the product is a floor covering, a roof covering, a wall covering, a tile, a tessera, a brick, a paving stone, a fair faced concrete surface, a stair, a step, a table, a shelf, a bath tub, a saucer, or a door mat.

According to a further aspect of the present invention, use of a substrate with a slip resistant surface according to the present invention in decorative applications, in artistic applications, in visual applications, in building applications, in reconstruction applications, or in household applications is provided.

The scope and interest of the present invention will be better understood based on the following figures and examples which are intended to illustrate certain embodiments of the present invention and are non-limitative.

### Description of figures

Fig. 1 shows a digital image of a substrate comprising a slip resistant surface in form of a logo.
Fig. 2 shows a digital image of a substrate comprising a slip resistant surface in form of a logo.
Fig. 3 shows a confocal laser scanning microscope (CLSM) image of an untreated substrate A (top), and a graph of the determined surface roughness (bottom).
Fig. 4 shows a confocal laser scanning microscope (CLSM) image of the slip resistant surface area of a substrate manufactured according to the method of the present invention (top), and graph of the determined surface roughness (bottom).
Fig. 5 shows a confocal laser scanning microscope (CLSM) image of an untreated substrate A (top), and a graph of the determined surface roughness (bottom).
Fig. 6 shows a confocal laser scanning microscope (CLSM) image of the slip resistant surface area of a substrate manufactured according to the method of the present invention (top), and graph of the determined surface roughness (bottom).
Fig. 7 shows a graph of the determined surface roughness values of untreated substrates and substrates with a slip resistant surface manufactured according to the method of the present invention.

### Examples

In the following, measurement methods and materials implemented in the examples are described.

### 1. Methods

### Digital images

Digital images of the prepared samples were recorded with an EOS 600D digital camera equipped with a Canon Macro lens, EF-S 60 mm, 1:2.8 USM (Canon Japan).

### Scanning electron microscope (SEM) micrographs

The prepared samples were examined by a Sigma VP field emission scanning electron microscope (Carl Zeiss AG, Germany) and a variable pressure secondary electron detector (VPSE) with a chamber pressure of about 50 Pa.

### Confocal Laser Scanning Microscopy (CLSM)

The surface roughness of the prepared samples was examined with a Zeiss LSM5 Pascal with Ar & He/Ne-Laser, with ZEN and Mountains Imaging Software (ZEN 2009 Version 6.0SP2 Version 6,0,0,303; MountainsMap Universal 7.2 ConfoMap ST Version 7.2.7568).

### 2. Materials

### Substrates

Substrate A: Engineered stone comprising 90 wt.-% calcium carbonate, 7 wt.-% polyester resin, 3 wt.-% other minerals such as quartz and various silicates (wt.-% are based on the total weight of the stone substrate).

Substrate B: Engineered stone comprising 90 wt.-% calcium carbonate, 7 wt.-% polyester resin, 1-2 wt.-% of blue colorant, and other minerals such as quartz and various silicates (wt.-% are based on the total weight of the stone substrate).

### Treatment composition

41 wt.-% phosphoric acid, 23 wt.-% ethanol, and 36 wt.-% water (wt.-% are based on the total weight of the treatment composition).

### 3. Examples

Samples were prepared by applying the treatment composition in form of a logo (Omya) on substrates A and B with an inkjet printer (Dimatix DMP 2831, Fujifilm Dimatix Inc., USA) with 10 pl (pico litre) droplet size with a drop spacing of 30 µm on engineered stone substrates A and B. Before analysis, the samples were washed with hand soap under running tap water.

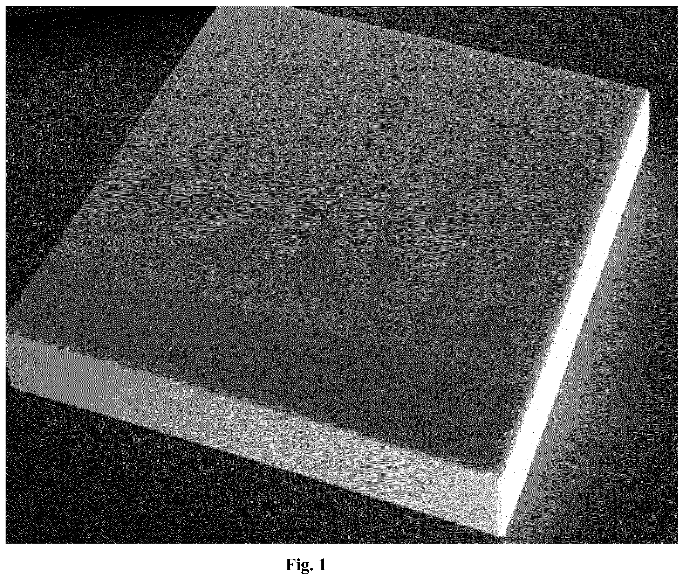

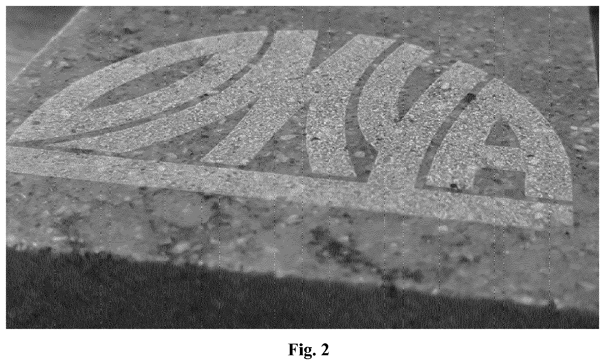

Fig. 1 shows a digital image of the printed slip-resistant surface in form of logo on substrate A, and Fig. 2 shows a shows a digital image of the printed slip-resistant surface in form of logo on substrate B.

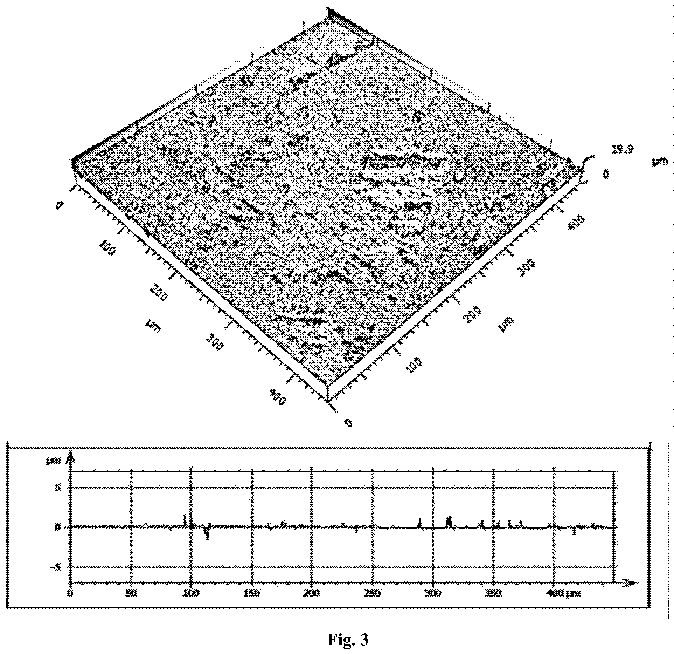

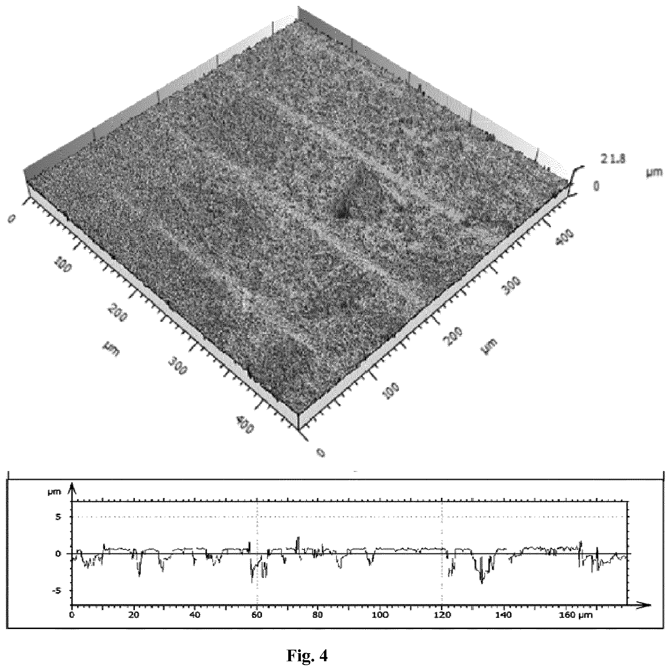

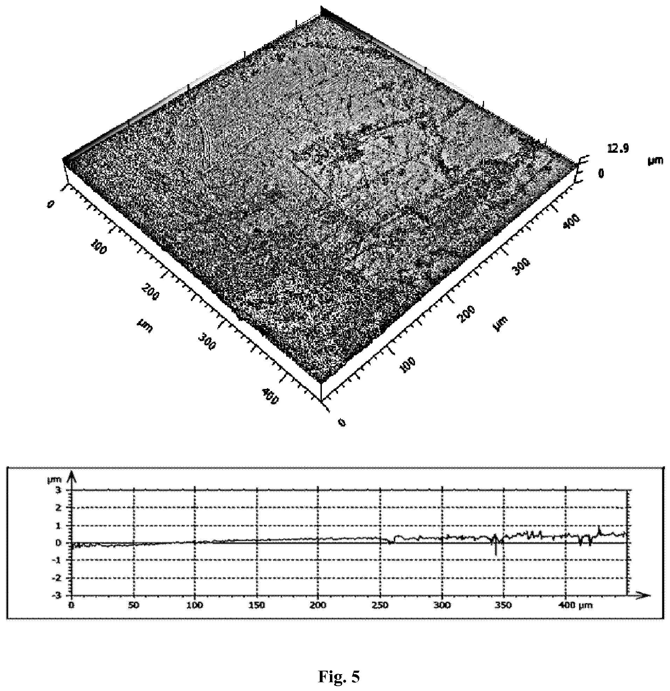

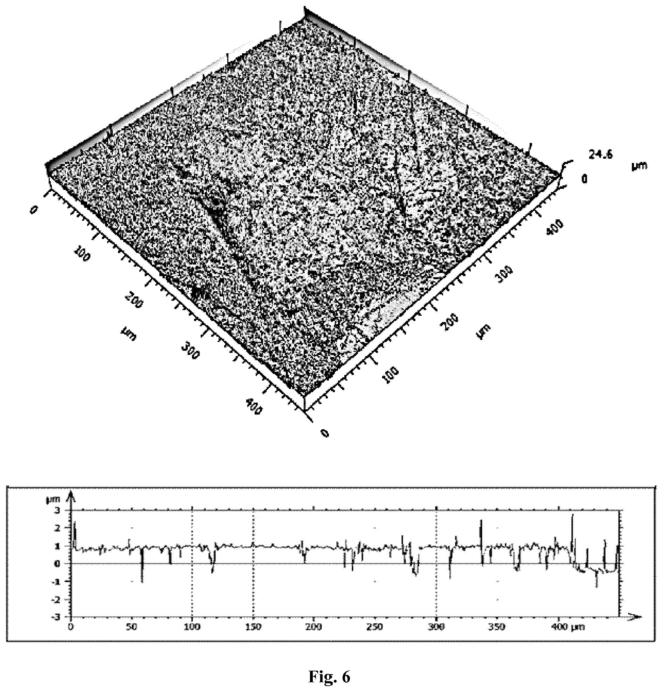

Fig. 3 shows a confocal laser scanning microscope (CLSM) image of the untreated substrate A (top), and a graph of the determined surface roughness (bottom). Fig. 4 shows a CLSM image of the slip resistant surface area of substrate A (top), and graph of the determined surface roughness (bottom). Fig. 5 shows a CLSM image of the untreated substrate B (top), and graph of the determined surface roughness (bottom). Fig. 6 shows a CLSM image of the slip resistant surface area of substrate B (top), and graph of the determined surface roughness (bottom).

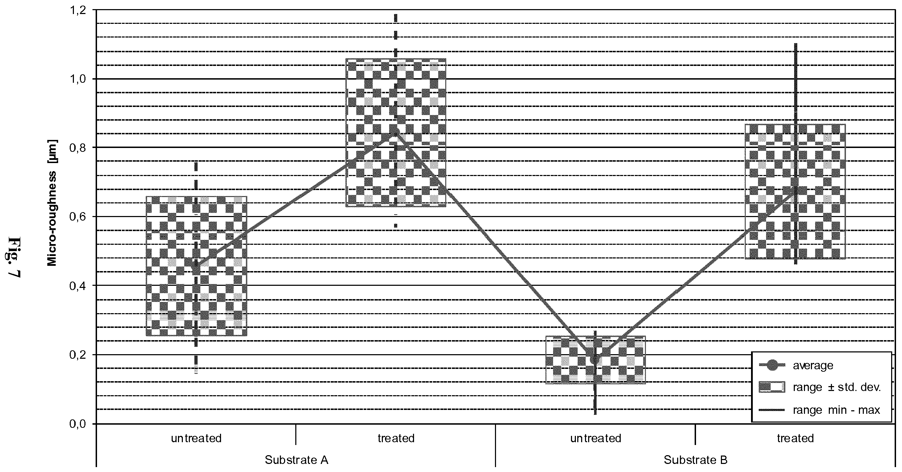

It can be gathered from Figs. 4 and 6 that the surface roughness of the substrates prepared according to the method of the present invention is increased. A comparison of the surface roughness values of the surfaces of the untreated substrates A and B and the treated surfaces of the substrates A and B is presented in Fig. 7. The shown values are average results taken from 10 samples (10 different spots on the same stone sample). Said figure reveals that the surface roughness is increased by the inventive method between 2 and 3 times compared to the untreated surfaces.

## Claims

1. A method for improving the slip resistance of a substrate comprising the following steps:
a) providing a substrate, wherein the substrate comprises at least one external surface comprising a salifiable alkaline or alkaline earth compound,
b) providing a fluorine-free treatment composition comprising at least one acid, and
c) applying the treatment composition onto the at least one external surface of the substrate to form a slip resistant surface.

2. The method of claim 1, wherein the substrate is selected from the group consisting of metal, glass, marble, natural stone, dolomitic stone, engineered stone, composite stone, brick, concrete, ceramic, cement, porcelain, enamel, wood, engineered wood, wooden plastic composite, and combinations thereof.

3. The method of any one of the preceding claims, wherein the at least one external surface and the substrate of step a) are made from the same material.

4. The method of any one of the preceding claims, wherein the salifiable alkaline or alkaline earth compound is an alkaline or alkaline earth oxide, an alkaline or alkaline earth hydroxide, an alkaline or alkaline earth alkoxide, an alkaline or alkaline earth methylcarbonate, an alkaline or alkaline earth hydroxycarbonate, an alkaline or alkaline earth bicarbonate, an alkaline or alkaline earth carbonate, or a mixtures thereof, preferably the salifiable alkaline or alkaline earth compound is an alkaline or alkaline earth carbonate being preferably selected from lithium carbonate, sodium carbonate, potassium carbonate, magnesium carbonate, calcium magnesium carbonate, calcium carbonate, or mixtures thereof, more preferably the salifiable alkaline or alkaline earth compound is calcium carbonate, and most preferably the salifiable alkaline or alkaline earth compound is a ground calcium carbonate, a precipitated calcium carbonate and/or a surface-treated calcium carbonate.

5. The method of any one of the preceding claims, wherein the at least one acid is selected from the group consisting of hydrochloric acid, sulphuric acid, sulphurous acid, phosphoric acid, citric acid, oxalic acid, acetic acid, formic acid, sulphamic acid, tartaric acid, phytic acid, boric acid, succinic acid, suberic acid, benzoic acid, adipic acid, pimelic acid, azelaic acid, sebaic acid, isocitric acid, aconitic acid, propane-1,2,3-tricarboxylic acid, trimesic acid, glycolic acid, lactic acid, mandelic acid, acidic organosulfur compounds, acidic organophosphorus compounds, phosphonic acid, and mixtures thereof, preferably the at least one acid is selected from the group consisting of hydrochloric acid, sulphuric acid, sulphurous acid, phosphoric acid, oxalic acid, boric acid, suberic acid, succinic acid, sulphamic acid, tartaric acid, and mixtures thereof, more preferably the at least one acid is selected from the group consisting of sulphuric acid, phosphoric acid, boric acid, suberic acid, sulphamic acid, tartaric acid, and mixtures thereof, and most preferably the at least one acid is phosphoric acid and/or sulphuric acid.

6. The method of any one of the preceding claims, wherein the treatment composition further comprises a printing ink, a pigmented ink, a colorant, a dye, metal ions, transition metal ions, a surfactant, a dispersant, a biocide, a corrosion inhibitor, a hydrophobising agent, a wax, a polymer and/or a polymerising composition.

7. The method of any one of the preceding claims, wherein the treatment composition comprises the at least one acid in an amount from 0.1 to 100 wt.-%, based on the total weight of the liquid treatment composition, preferably in an amount from 1 to 80 wt.-%, more preferably in an amount from 3 to 60 wt.-%, and most preferably in an amount from 10 to 50 wt.-%.

8. The method of any one of the preceding claims, wherein the treatment composition is applied by spray coating, inkjet printing, offset printing, flexographic printing, screen printing, plotting, contact stamping, rotogravure printing, powder coating, spin coating, reverse gravure coating, slot coating, curtain coating, slide bed coating, film press, metered film press, blade coating, brush coating and/or a pencil, preferably by inkjet printing or spray coating.

9. The method of any one of the preceding claims, wherein the treatment composition is continuously applied to the entire at least one external surface.

10. The method of any one of claims 1 to 8, wherein the treatment composition is applied onto the at least one external surface in form of a preselected pattern, preferably in form of a channel, a barrier, an array, an one-dimensional bar code, a two-dimensional bar code, a three-dimensional bar code, a security mark, a label, a number, a letter, an alphanumeric symbol, a logo, an image, a shape, a design, or a combination thereof.

11. The method of any one of the preceding claims, wherein the substrate comprises the salifiable alkaline or alkaline earth compound in an amount at least 1 wt.-%, based on the total weight of the substrate, preferably at least 5 wt.-%, more preferably at least 10 wt.-%, even more preferably at least 25 wt.-%, and most preferably at least 50 wt.-%.

12. A substrate with a slip resistant surface, obtainable by a method according to any one of claims 1 to 11.

13. A product comprising a substrate with a slip resistant surface according to claim 12, wherein the product is a floor covering, a roof covering, a wall covering, a tile, a tessera, a brick, a paving stone, a fair faced concrete surface, a stair, a step, a table, a shelf, a bath tub, a saucer, or a door mat.

14. Use of a substrate with a slip resistant surface according to claim 12, in decorative applications, in artistic applications, in visual applications, in building applications, in reconstruction applications, or in household applications.
